# EUROPÄISCHE PATENTSCHRIFT

(11) **EP 2 861 884 B1**
(45) Veröffentlichungstag und Bekanntmachung des Hinweises auf die Patenterteilung: **10.08.2016**
(21) Anmeldenummer: 13729641.4
(22) Anmeldetag: 05.06.2013
(51) Int. Cl.: F16D 23/12

(54) **KUPPLUNGSEINRICHTUNG MIT EINER BETÄTIGUNGSEINRICHTUNG**
COUPLING DEVICE HAVING AN ACTUATING DEVICE
DISPOSITIF D'EMBRAYAGE AVEC DISPOSITIF DE COMMANDE

(30) Priorität: 13.06.2012 DE 102012209930; 29.08.2012 DE 102012215276
(43) Veröffentlichungstag der Anmeldung: 22.04.2015
(73) Patentinhaber: Schaeffler Technologies AG & Co. KG, 91074 Herzogenaurach (DE)
(72) Erfinder: VOGEL, Florian, 77815 Bühl (DE)
(86) Internationale Anmeldenummer: PCT/EP2013/061600
(87) Internationale Veröffentlichungsnummer: WO 2013/186101

(56) Entgegenhaltungen:
- WO-A1-2013/087055
- DE-A1-102009 054 878
- US-A1- 2002 086 755

## Beschreibung

Die Erfindung betrifft eine Kupplungseinrichtung mit einer Betätigungseinrichtung gemäß dem Oberbegriff des Patentanspruchs 1. Insbesondere betrifft die Erfindung eine Kupplungseinrichtung mit einer Betätigungseinrichtung, insbesondere für einen Antriebsstrang eines Kraftfahrzeugs aufweisend eine Brennkraftmaschine, eine elektrische Maschine mit einem Stator und einem Rotor und eine Getriebeeinrichtung, wobei die Kupplungseinrichtung in dem Antriebsstrang zwischen der Brennkraftmaschine einerseits und der elektrischen Maschine sowie der Getriebeeinrichtung andererseits anordenbar ist, die Kupplungseinrichtung und die Betätigungseinrichtung in den Rotor der elektrischen Maschine integriert sind und die Betätigungseinrichtung eine verstellbare Rampeneinrichtung mit ersten Rampen und zweiten Rampen sowie ein Umlaufrädergetriebe mit einem Hohlrad, einem Sonnenrad, Umlaufrädern und einem Steg aufweist.

Aus der DE 10 2008 006 062 A1 ist ein Antriebsstrang bekannt in einem Kraftfahrzeug mit einem Verbrennungsmotor und einem Starter-Generator, wobei mittels einer in Öl laufenden Anfahrkupplung die Drehverbindung im Kraftfluss zwischen dem Verbrennungsmotor einerseits, und dem Starter-Generator und dem Getriebe andererseits, hergestellt werden kann, bei dem der Rotor des Starter- Generators - zumindest mittelbar - an einem Kupplungsdeckel gelagert ist und dass der Kupplungsdeckel drehfest und öldicht mit der Kupplungsglocke des Getriebes verbunden ist, um den Antriebsstrang kostengünstiger und platzsparender zu gestalten.

Aus der DE 10 2010 048 830 A1 ist ein Kupplungsaggregat bekannt in einem Antriebsstrang eines Kraftfahrzeugs mit einer Brennkraftmaschine mit einer Kurbelwelle und einem Getriebe mit einer Getriebeeingangswelle mit einer ersten Reibungskupplung enthaltend eine erste Gegendruckplatte und eine axial verlagerbar und drehfest an der ersten Gegendruckplatte aufgenommene erste Anpressplatte, die von einer Tellerfeder gegen die erste Gegendruckplatte unter Zwischenlegung von Reibbelägen einer ersten, mit der Getriebeeingangswelle drehfest verbundenen Kupplungsscheibe verspannt wird, und mit einer zweiten Reibungskupplung enthaltend eine zweite Gegendruckplatte und eine axial verlagerbar und drehfest an der zweiten Gegendruckplatte aufgenommene Anpressplatte, die in Richtung der zweiten Gegendruckplatte unter Zwischenlegung von Reibbelägen einer zweiten, mit der Getriebeeingangswelle verbundenen Kupplungsscheibe verspannbar ist, bei dem die zweite Gegendruckplatte wirksam mit der Kurbelwelle verbunden, die erste Gegendruckplatte auf der zweiten Gegendruckplatte verdrehbar gelagert und zwischen der ersten Gegendruckplatte und der zweiten Anpressplatte eine axial wirksame Rampeneinrichtung angeordnet ist, um eine vergrößerte Kapazität an übertragbarem Moment mit geringer Betätigungskraft bereitzustellen.

Aus der am 14.12.2011 eingereichten deutschen Patentanmeldung mit dem Aktenzeichen 10 2011 088 473.4 ist eine Kupplungseinrichtung bekannt mit einer Betätigungseinrichtung für einen Antriebsstrang eines Kraftfahrzeugs aufweisend eine Brennkraftmaschine, eine elektrische Maschine mit einem Stator und einem Rotor und eine Getriebeeinrichtung, wobei die Kupplungseinrichtung in dem Antriebsstrang zwischen der Brennkraftmaschine einerseits und der elektrischen Maschine sowie der Getriebeeinrichtung andererseits angeordnet ist, wobei die Kupplungseinrichtung und die Betätigungseinrichtung in den Rotor der elektrischen Maschine integriert sind, um die Kupplungseinrichtung baulich und/oder funktional zu verbessern.

Zur genaueren Information über die Merkmale der vorliegenden Erfindung wird ausdrücklich auf die Veröffentlichung DE 10 2010 048 830 A1 und auf die deutsche Patentanmeldung mit dem Aktenzeichen 10 2011 088 473.4 verwiesen. Die Lehren dieser Veröffentlichung und dieser Patentanmeldung sind als Bestandteil des vorliegenden Dokuments anzusehen. Merkmale dieser Veröffentlichung und dieser Patentanmeldung sind Merkmale des vorliegenden Dokuments.

Aus der US 2002/0086755 A1 ist eine Kupplungseinrichtung mit einer Betätigungseinrichtung bekannt, die auf den Oberbegriff des Patentanspruchs 1 lesbar ist.

Der Erfindung liegt die Aufgabe zugrunde, eine eingangs genannte Kupplungseinrichtung baulich und/oder funktional zu verbessern. Insbesondere sollen die Kupplungseinrichtung und die Betätigungseinrichtung in dem Rotor der elektrischen Maschine untergebracht werden. Insbesondere soll eine elektrische Betätigung der Kupplungseinrichtung ermöglicht sein. Insbesondere soll ein Bauraumbedarf der Kupplungseinrichtung und der Betätigungseinrichtung reduziert sein. Insbesondere soll ein Herstellungsaufwand reduziert sein. Insbesondere soll eine rotorintegrierte Kupplungseinrichtung bereitgestellt werden, die es ermöglicht, die Brennkraftmaschine mit dem Antriebsstrang zu verbinden bzw. von dem Antriebsstrang zu trennen. Insbesondere soll mithilfe der Kupplungseinrichtung innerhalb kürzester Zeit die Brennkraftmaschine an den Antriebsstrang koppelbar und ein Moment der Brennkraftmaschine übertragbar sein. Insbesondere soll die Kupplungseinrichtung rein elektrisch betätigbar sein, dabei soll eine Betätigungsenergie möglichst gering gehalten sein. Insbesondere soll eine Wirksamkeit der Betätigungseinrichtung erhöht sein. Insbesondere soll ein Verstellbereich der Rampeneinrichtung vergrößert sein.

Erfindungsgemäß gelöst wird diese Aufgabe durch eine Kupplungseinrichtung mit einer Betätigungseinrichtung gemäß Patentanspruch 1. Bevorzugte Ausführungsbeispiele der Erfindung sind in den abhängigen Ansprüchen dargelegt.

Die Kupplungseinrichtung ist ausgestattet mit einer Betätigungseinrichtung, insbesondere für einen Antriebsstrang eines Kraftfahrzeugs aufweisend eine Brennkraftmaschine, eine elektrische Maschine mit einem Stator und einem Rotor und eine Getriebeeinrichtung, wobei die Kupplungseinrichtung in dem Antriebsstrang zwischen der Brennkraftmaschine einerseits und der elektrischen Maschine sowie der Getriebeeinrichtung andererseits anordenbar ist, die Kupplungseinrichtung und die Betätigungseinrichtung in den Rotor der elektrischen Maschine integriert sind und die Betätigungseinrichtung eine verstellbare Rampeneinrichtung mit ersten Rampen und zweiten Rampen sowie ein Umlaufrädergetriebe mit einem Hohlrad, einem Sonnenrad, Umlaufrädern und einem Steg aufweist, bei der die ersten Rampen dem Hohlrad und die zweiten Rampen dem Steg zugeordnet sind.

In dem Antriebsstrang können die Brennkraftmaschine, die Kupplungseinrichtung, die elektrische Maschine und die Getriebeeinrichtung in der genannten Reihenfolge angeordnet sein. In dem Antriebsstrang kann ein Drehschwingungsdämpfer, insbesondere ein Zweimassenschwungrad, angeordnet sein. Der Drehschwingungsdämpfer kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Die Bezeichnungen "Eingangsteil" und "Ausgangsteil" sind auf einen von der Brennkraftmaschine ausgehenden Leistungsfluss bezogen. Der Drehschwingungsdämpfer kann in dem Antriebsstrang zwischen der Brennkraftmaschine und der Kupplungseinrichtung angeordnet sein. Der Drehschwingungsdämpfer kann in dem Antriebsstrang zwischen der Brennkraftmaschine und der elektrische Maschine angeordnet sein. Das Eingangsteil des Drehschwingungsdämpfers kann mit der Brennkraftmaschine antriebsverbunden sein. Das Ausgangsteil des Drehschwingungsdämpfers kann mit der Kupplungseinrichtung antriebsverbunden sein. Das Ausgangsteil des Drehschwingungsdämpfers kann mit der elektrischen Maschine antriebsverbunden sein. In dem Antriebsstrang kann wenigstens ein antreibbares Rad angeordnet sein. Das wenigstens eine antreibbare Rad kann in dem Antriebsstrang der Getriebeeinrichtung nachfolgend angeordnet sein.

Das Kraftfahrzeug kann einen Hybridantrieb aufweisen. Das Kraftfahrzeug kann einen ersten Energieumwandler aufweisen. Der erste Energieumwandler kann die Brennkraftmaschine sein. Die Brennkraftmaschine kann mit einem Kohlenwasserstoff, wie Benzin, Diesel, Erdgas (Liquefied Natural Gas, LNG oder Compressed Natural Gas, CNG) oder Autogas (Liquefied Petroleum Gas, LPG) betreibbar sein. Die Brennkraftmaschine kann mit Wasserstoff betreibbar sein. Das Kraftfahrzeug kann einen ersten Energiespeicher aufweisen. Der erste Energiespeicher kann ein Kraftstofftank sein. Das Kraftfahrzeug kann einen zweiten Energieumwandler aufweisen. Der zweite Energieumwandler kann die elektrische Maschine sein. Die elektrische Maschine kann als Elektromotor betreibbar sein. Die elektrische Maschine kann als Generator betreibbar sein. Die elektrische Maschine kann einen Elektromotor und einen Generator baulich vereinigen. Die elektrische Maschine kann ein Starter-Generator sein. Das Kraftfahrzeug kann einen zweiten Energiespeicher aufweisen. Der zweite Energiespeicher kann ein elektrischer Energiespeicher sein. Der zweite Energiespeicher kann ein Akkumulator sein. Der zweite Energiespeicher kann eine Batterie sein. Die Energieumwandler können zum Antrieb des Kraftfahrzeugs dienen. Mithilfe der Energieumwandler kann eine mechanische Leistung erzeugbar sein. Das Kraftfahrzeug kann einen parallelen Hybridantrieb aufweisen. Das Kraftfahrzeug kann einen Vollhybridantrieb aufweisen.

Die Kupplungseinrichtung kann eine Reibungskupplung aufweisen. Die Kupplungseinrichtung kann eine trockene Kupplung aufweisen. Die Kupplungseinrichtung kann eine Einscheibenkupplung aufweisen. Die Kupplungseinrichtung kann eine nasse Kupplung aufweisen. Die Kupplungseinrichtung kann eine Mehrscheibenkupplung aufweisen. Die Kupplungseinrichtung kann eine Lamellenkupplung aufweisen. Die Kupplungseinrichtung kann eine gedrückte Kupplung aufweisen. Die Kupplungseinrichtung kann eine gezogene Kupplung aufweisen. Die Kupplungseinrichtung kann eine Anpressplatte aufweisen. Die Kupplungseinrichtung kann wenigstens eine Zwischendruckplatte aufweisen. Die Kupplungseinrichtung kann eine Druckplatte aufweisen. Die Kupplungseinrichtung kann wenigstens eine Kupplungsscheibe aufweisen. Die wenigstens eine Kupplungsscheibe kann Reibbeläge aufweisen. Es können Zwischendruckplatten und Kupplungsscheiben abwechselnd angeordnet sein. Die wenigstens eine Kupplungsscheibe kann zwischen der Anpressplatte, der wenigstens einen Zwischendruckplatte und/oder der Druckplatte einklemmbar sein.

Die Kupplungseinrichtung kann in dem Antriebsstrang zwischen der Brennkraftmaschine und der elektrischen Maschine angeordnet sein. Die Kupplungseinrichtung kann in dem Antriebsstrang zwischen der Brennkraftmaschine und dem Rotor der elektrischen Maschine angeordnet sein. Die Kupplungseinrichtung kann ein Eingangsteil und ein Ausgangsteil aufweisen. Die Bezeichnungen "Eingangsteil" und "Ausgangsteil" sind auf einen zu einem antreibbaren Rad des Kraftfahrzeugs hin gerichteten Leistungsfluss bezogen. Das Eingangsteil der Kupplungseinrichtung kann die wenigstens eine Kupplungsscheibe aufweisen. Das Eingangsteil der Kupplungseinrichtung kann mit der Brennkraftmaschine antriebsverbunden sein. Das Ausgangsteil der Kupplungseinrichtung kann die Anpressplatte, die wenigstens eine Zwischendruckplatte und/oder die Druckplatte aufweisen. Das Ausgangsteil der Kupplungseinrichtung kann mit der elektrischen Maschine antriebsverbunden sein. Das Ausgangsteil der Kupplungseinrichtung kann mit dem Rotor der elektrischen Maschine antriebsverbunden sein. Die Kupplungseinrichtung kann in dem Antriebsstrang zwischen der Brennkraftmaschine und der Getriebeeinrichtung angeordnet sein. Das Ausgangsteil der Kupplungseinrichtung kann mit der Getriebeeinrichtung antriebsverbunden sein. Das Ausgangsteil der Kupplungseinrichtung kann mit einer Eingangswelle der Getriebeeinrichtung antriebsverbunden sein. Die Kupplungseinrichtung kann in dem Antriebsstrang zwischen dem Drehschwingungsdämpfer und der elektrischen Maschine angeordnet sein. Das Eingangsteil der Kupplungseinrichtung kann mit dem Drehschwingungsdämpfer antriebsverbunden sein. Das Eingangsteil der Kupplungseinrichtung kann mit dem Ausgangsteil des Drehschwingungsdämpfers antriebsverbunden sein. Die Kupplungseinrichtung kann in dem Antriebsstrang zwischen dem Drehschwingungsdämpfer und der Getriebeeinrichtung angeordnet sein.

Die Kupplungseinrichtung kann ausgehend von einer vollständig ausgerückten Betätigungsstellung, in der zwischen dem Eingangsteil und dem wenigstens einen Ausgangsteil im Wesentlichen keine Leistungsübertragung erfolgt, bis hin zu einer vollständig eingerückten Betätigungsstellung, in der zwischen dem Eingangsteil und dem wenigstens einen Ausgangsteil im Wesentlichen eine vollständige Leistungsübertragung erfolgt, betätigungsabhängig eine zunehmende Leistungsübertragung ermöglichen, wobei eine Leistungsübertragung zwischen dem Eingangsteil und dem wenigstens einen Ausgangsteil kraftschlüssig, insbesondere reibschlüssig, erfolgen kann. Umgekehrt kann ausgehend von einer vollständig eingerückten Betätigungsstellung, in der zwischen dem Eingangsteil und dem wenigstens einen Ausgangsteil im Wesentlichen eine vollständige Leistungsübertragung erfolgt, bis hin zu einer vollständig ausgerückten Betätigungsstellung, in der zwischen dem Eingangsteil und dem wenigstens einen Ausgangsteil im Wesentlichen keine Leistungsübertragung erfolgt, betätigungsabhängig eine abnehmende Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die Kupplungseinrichtung kann einen Momentfühler aufweisen. Der Momentfühler kann an dem Eingangsteil der Kupplungseinrichtung angeordnet sein. Der Momentfühler kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Ein Moment kann aufgrund einer Relativverdrehung zwischen dem Eingangsteil und dem Ausgangsteil entgegen einer Kraft des Energiespeichers erfassbar sein. Mithilfe des Momentfühlers kann eine Regelung der Kupplungseinrichtung erfolgen.

Die Getriebeeinrichtung kann eine Eingangswelle und eine Ausgangswelle aufweisen. Die Bezeichnungen "Eingangswelle" und "Ausgangswelle" sind auf einen von der Brennkraftmaschine oder von der elektrischen Maschine ausgehenden Leistungsfluss bezogen. Die Getriebeeinrichtung kann ein Stufengetriebe aufweisen. Die Getriebeeinrichtung kann ein stufenloses Getriebe aufweisen. Die Getriebeeinrichtung kann ein Doppelkupplungsgetriebe aufweisen. Die Getriebeeinrichtung kann ein Wandlerschaltkupplungsgetriebe aufweisen. Die Getriebeeinrichtung kann manuell schaltbar sein. Die Getriebeeinrichtung kann automatisiert schaltbar sein. Die Eingangswelle kann mit der elektrischen Maschine antriebsverbunden sein. Die Eingangswelle kann mit dem Rotor der elektrischen Maschine antriebsverbunden sein. Die Eingangswelle kann mit der Kupplungseinrichtung antriebsverbunden sein. Die Eingangswelle kann mit dem Ausgangsteil der Kupplungseinrichtung antriebsverbunden sein. Die Ausgangswelle kann mit dem wenigstens einen antreibbaren Rad antriebsverbunden sein.

Die elektrische Maschine kann ein Gehäuse aufweisen. Der Stator kann zu dem Gehäuse fest angeordnet sein. Der Stator kann radial außerhalb des Rotors angeordnet sein. Die elektrische Maschine kann wenigstens eine Welle oder Nabe aufweisen. Der Rotor kann an der wenigstens einen Welle oder Nabe fest angeordnet sein. Der Rotor kann radial innerhalb des Stators angeordnet sein. Die elektrische Maschine kann eine erste Welle oder Nabe und eine zweite Welle oder Nabe aufweisen. Die erste Welle oder Nabe und die zweite Welle oder Nabe können koaxial angeordnet sein. Der Rotor kann an der zweiten Welle oder Nabe fest angeordnet sein. Die erste Welle oder Nabe kann dem Eingangsteil der Kupplungseinrichtung zugeordnet sein. Die zweite Welle oder Nabe kann dem Ausgangsteil der Kupplungseinrichtung zugeordnet sein. Der Rotor kann eine hülsenartige Form aufweisen. Der Rotor kann eine rohrabschnittartige Form aufweisen. Der Rotor kann eine hohlzylindrische Form aufweisen. In dem Rotor kann ein Aufnahmeraum gebildet sein.

Eine in den Rotor integrierte Kupplungseinrichtung kann eine Kupplungseinrichtung sein, die zumindest im Wesentlichen innerhalb des Rotors angeordnet ist. Eine in den Rotor integrierte Kupplungseinrichtung kann eine Kupplungseinrichtung sein, die radial zumindest im Wesentlichen innerhalb des Rotors angeordnet ist. Eine radiale Richtung ist eine zu einer Drehachse der elektrischen Maschine senkrechte Richtung. Eine in den Rotor integrierte Kupplungseinrichtung kann eine Kupplungseinrichtung sein, die axial zumindest im Wesentlichen innerhalb des Rotors angeordnet ist. Eine axiale Richtung ist eine Erstreckungsrichtung einer Drehachse der elektrischen Maschine. Eine in den Rotor integrierte Betätigungseinrichtung kann eine Betätigungseinrichtung sein, die zumindest im Wesentlichen innerhalb des Rotors angeordnet ist. Eine in den Rotor integrierte Betätigungseinrichtung kann eine Betätigungseinrichtung sein, die radial zumindest im Wesentlichen innerhalb des Rotors angeordnet ist. Eine in den Rotor integrierte Betätigungseinrichtung kann eine Betätigungseinrichtung sein, die axial zumindest im Wesentlichen innerhalb des Rotors angeordnet ist. Die Kupplungseinrichtung und die Betätigungseinrichtung können abschnittsweise ineinander geschachtelt angeordnet sein. Die Betätigungseinrichtung kann abschnittsweise auf einer der Brennkraftmaschine zugewandten Seite angeordnet sein. Die Kupplungseinrichtung kann abschnittsweise auf einer der Getriebeeinrichtung zugewandten Seite angeordnet sein. Die Betätigungseinrichtung kann abschnittsweise radial innen angeordnet sein. Die Kupplungseinrichtung kann abschnittsweise radial außen angeordnet sein.

Mithilfe der Betätigungseinrichtung kann die Anpressplatte der Kupplungseinrichtung axial verlagerbar sein. Mithilfe der Betätigungseinrichtung kann die Kupplungseinrichtung geöffnet oder geschlossen werden. Mithilfe der Betätigungseinrichtung kann die Kupplungseinrichtung eingerückt oder ausgerückt werden. Die Betätigungseinrichtung kann selbstverstärkend sein. Damit ist eine Schaltung einer vergleichsweise hohen Arbeitsleistung mit einer vergleichsweise geringen Betätigungskraft ermöglicht. Es kann eine Betätigungskraft selbstverstärkt sein. Damit ist eine verringerte Betätigungsenergie erforderlich, um die Kupplungseinrichtung ein- und/oder auszurücken. Es ist eine verringerte Betätigungskraft erforderlich. Es ist ein verringerter Betätigungsweg erforderlich. Ein Aktuator kann eine verringerte Leistung aufweisen. Ein Aktuator kann eine verringerte Leistungsaufnahme aufweisen. Ein Aktuator kann einen verringerten Bauraum aufweisen. Ein Aktuator kann ein verringertes Gewicht aufweisen. Eine Schaltgeschwindigkeit kann erhöht sein.

Die Rampeneinrichtung kann durch verdrehen verstellbar sein. Die ersten Rampen und die zweiten Rampen können gegeneinander verdrehbar sein. Eine Verdrehung der ersten Rampen und der zweiten Rampen gegeneinander kann eine Veränderung eines axialen Abstands bewirken. Zwischen den ersten Rampen und den zweiten Rampen können Wälzkörper, insbesondere Kugeln, angeordnet sein. Die Rampen können Laufflächen für die Wälzkörper bilden. Die Rampen können als Wälzkörperrampen, insbesondere als Kugelrampen, ausgebildet sein. Die Rampen können in Umfangsrichtung der Kupplungseinrichtung verteilt angeordnet sein. Die Rampen zu einer zur Drehachse der Kupplungseinrichtung senkrechten Ebene schief sein. Die Rampen können in Umfangsrichtung der Kupplungseinrichtung ansteigen und/oder abfallen. Die Rampen können einseitig ansteigend sein. Die Rampen können beidseitig ansteigend sein. Die ersten Rampen und die zweiten Rampen können zueinander geometrisch komplementär ausgebildet sein. Die ersten Rampen können mit den zweiten Rampen derart korrespondieren, dass sich bei einer Verdrehung der ersten Rampen und der zweiten Rampen gegeneinander die ersten Rampen und die zweiten Rampen in Erstreckungsrichtung der Drehachse der Kupplungseinrichtung voneinander weg oder aufeinander zu bewegen. Die ersten Rampen können die Wälzkörper von radial innen stützen. Die zweiten Rampen können die Wälzkörper von radial außen stützen. Die Wälzkörper können einen derartigen Durchmesser aufweisen, dass sie zwischen den ersten Rampen und den zweiten Rampen verliersicher gehalten sind. Die Wälzkörper können in einem Wälzkörperkäfig angeordnet sein. Damit ist eine Zuordnung der Wälzkörper zu den Rampen gewährleistet.

Das Umlaufrädergetriebe kann ein Planetengetriebe sein. Das Hohlrad kann eine Innenverzahnung aufweisen. Das Sonnenrad kann eine Außenverzahnung aufweisen. Die Umlaufräder können jeweils eine Außenverzahnung aufweisen. Die Umlaufräder können jeweils mit dem Hohlrad und/oder mit dem Sonnenrad in Eingriff stehen. Das Umlaufrädergetriebe kann eine erste Getriebewelle, eine zweite Getriebewelle und dritte Getriebewelle aufweisen. Das Hohlrad kann an der ersten Getriebewelle angeordnet sein. Das Sonnenrad kann an der zweiten Getriebewelle angeordnet sein. Die Umlaufräder können an den dritten Getriebewellen angeordnet sein. Die erste Getriebewelle und die zweite Getriebewelle können koaxiale Achsen aufweisen. Die Achsen der dritten Getriebewellen können zu den Achsen der ersten Getriebewelle und der zweiten Getriebewelle parallel und von diesen beabstandet sein. Bei einem Betrieb des Umlaufrädergetriebes können die Umlaufräder um das Sonnenrad umlaufen. Der Steg kann ein Umlaufräderträger sein. Der Steg kann die dritten Getriebewellen miteinander fest verbinden oder die dritten Getriebewellen aufweisen.

Die erfindungsgemäße Kupplungseinrichtung mit der Betätigungseinrichtung kann in dem Rotor der elektrischen Maschine untergebracht werden. Es ist eine elektrische Betätigung der Kupplungseinrichtung ermöglicht. Ein Bauraumbedarf der Kupplungseinrichtung und der Betätigungseinrichtung ist reduziert. Ein Herstellungsaufwand ist reduziert. Es ist eine rotorintegrierte Kupplungseinrichtung bereitgestellt, die es ermöglicht, die Brennkraftmaschine mit dem Antriebsstrang zu verbinden bzw. von dem Antriebsstrang zu trennen. Mithilfe der erfindungsgemäßen Kupplungseinrichtung ist innerhalb kürzester Zeit die Brennkraftmaschine an den Antriebsstrang koppelbar und ein Moment der Brennkraftmaschine übertragbar. Die erfindungsgemäße Kupplungseinrichtung ist rein elektrisch betätigbar, dabei ist eine Betätigungsenergie möglichst gering gehalten. Eine Wirksamkeit der Betätigungseinrichtung ist erhöht. Ein Verstellbereich der Rampeneinrichtung ist vergrößert.

Die ersten Rampen können mit dem Hohlrad fest verbunden sein, die zweiten Rampen können mithilfe wenigstens einer Blattfeder mit dem Steg drehfest und axial vorgespannt verbunden sein und der Steg kann mit dem Rotor fest verbunden sein. Die Rampeneinrichtung kann einen ersten Rampenring aufweisen. Der erste Rampenring kann die ersten Rampen aufweisen. Der erste Rampenring kann zunächst baulich gesondert und nachfolgend mit dem Hohlrad verbunden sein. Die ersten Rampen können in das Hohlrad integriert sein. Die ersten Rampen können Abschnitte des Hohlrads sein. Die Rampeneinrichtung kann einen zweiten Rampenring aufweisen. Der zweite Rampenring kann die zweiten Rampen aufweisen. Der zweite Rampenring kann zunächst baulich gesondert und nachfolgend mit dem Steg verbunden sein. Die wenigstens eine Blattfeder kann eine Zugfeder sein. Die wenigstens eine Blattfeder kann eine ringartige Form aufweisen. Die wenigstens eine Blattfeder kann mit dem ersten Rampenring einerseits und mit dem zweiten Rampenring andererseits verbunden sein. Mithilfe der wenigstens einen Blattfeder kann die Rampeneinrichtung mit einer Vorspannkraft beaufschlagt sein. Der Steg kann mit dem Rotor einteilig hergestellt sein. Der Steg und der Rotor können zunächst baulich gesondert hergestellt und nachfolgend miteinander verbunden sein.

Das Umlaufrädergetriebe kann Umlaufradpaare mit ersten Umlaufrädern zur Bildung einer ersten Übersetzung mit dem Sonnenrad und zweiten Umlaufrädern zur Bildung einer zweiten Übersetzung mit dem Hohlrad aufweisen. Es können jeweils ein erstes Umlaufrad und ein zweites Umlaufrad einander zugeordnet sein. Die einander zugeordneten Umlaufräder können zueinander koaxial angeordnet sein. Die einander zugeordneten Umlaufräder können voneinander axial beabstandet sein. Die einander zugeordneten Umlaufräder können miteinander drehfest verbunden sein. Die ersten Umlaufräder können einen größeren Durchmesser als die zweiten Umlaufräder aufweisen. Damit ist eine Übersetzung des Umlaufrädergetriebes vergrößert.

Die hohlradseitigen Bauteile und die sonnenradseitigen Bauteile können ein zumindest annähernd gleiches Trägheitsmoment aufweisen. Die Trägheitsmomente können unter Berücksichtigung einer Übersetzung des Umlaufrädergetriebes zumindest annähernd gleich sein. Damit ist ein Einfluss von Drehbeschleunigungen auf die Betätigungseinrichtung, insbesondere ein unbeabsichtigtes Öffnen oder Schließen der Kupplungseinrichtung, reduziert oder verhindert.

Die Kupplungseinrichtung kann eine Anpressplatte aufweisen und der Steg kann der Anpressplatte zugeordnet sein. Die Anpressplatte und der Steg können miteinander drehfest verbunden sein. Die Anpressplatte kann relativ zu dem Steg begrenzt axial verlagerbar sein. Die Anpressplatte kann mit dem zweiten Rampenring einteilig hergestellt sein. Die Anpressplatte und der zweite Rampenring können zunächst baulich gesondert hergestellt und nachfolgend miteinander verbunden sein.

Die Betätigungseinrichtung kann einen Momentfühler zum geregelten Verstellen der Rampeneinrichtung und eine Freilaufeinrichtung aufweisen und der Momentfühler und die Freilaufeinrichtung können in radialer Richtung zumindest abschnittsweise überlappend angeordnet sein. Die Freilaufeinrichtung kann einen Innenring und einen Außenring aufweisen. Die Freilaufeinrichtung kann Klemmkörper aufweisen. Die Klemmkörper können zwischen dem Innenring und dem Außenring wirken. Mithilfe der Freilaufeinrichtung kann ein Verdrehen von Innenring und Außenring relativ zueinander in einer ersten Drehrichtung ermöglicht und in einer zur ersten Drehrichtung entgegengesetzten zweiten Drehrichtung gesperrt sein. Der Innenring kann einer Welle oder Nabe der elektrischen Maschine zugeordnet sein. Der Außenring kann dem Sonnenrad des Umlaufrädergetriebes zugeordnet sein. Damit ist eine Selbstregelung der Betätigungseinrichtung in der vollständig geschlossenen Betätigungsstellung der Kupplungseinrichtung ermöglicht. Es ist ein Schubbetrieb der Brennkraftmaschine ermöglicht. Der Momentfühler kann wenigstens eine Momentfeder, insbesondere schraubenförmige Druckfeder, aufweisen und die Momentfeder und die Freilaufeinrichtung können in radialer Richtung zumindest abschnittsweise überlappend angeordnet sein.

Die Betätigungseinrichtung kann einen elektrischen Aktuator aufweisen. Der Aktuator kann auf das Sonnenrad wirken. Mithilfe des Aktuators kann das Sonnenrad mit einem Vorsteuer-moment beaufschlagbar sein. Der elektrische Aktuator kann eine Wirbelstrombremse sein. Die Betätigungseinrichtung kann zum Schließen der Kupplungseinrichtung eine Wirbelstrombremse aufweisen. Zur Ansteuerung der Wirbelstrombremse kann eine elektrische Steuereinrichtung vorgesehen sein. Mithilfe der Wirbelstrombremse kann das Sonnenrad mit einem einer Drehung des Umlaufrädergetriebes entgegen wirkenden Moment derart beaufschlagbar sein, dass sich das Hohlrad mit den ersten Rampen und der Steg mit den zweiten Rampen relativ zueinander verdrehen.

Die Kupplungseinrichtung kann zwischen einer vollständig offenen Betätigungsstellung, Zwischenstellungen und einer vollständig geschlossenen Betätigungsstellung geregelt verstellbar sein. Eine geregelte Verstellung kann mithilfe einer Steuereinrichtung erfolgen. Von der Steuereinrichtung kann wenigstens ein Ausgangssignal ausgebbar sein. Von der Steuereinrichtung ein Ausgangssignal an den Aktuator der Kupplungseinrichtung ausgebbar sein. Der Steuereinrichtung kann wenigstens ein Eingangssignal zur Verfügung stehen. In der Steuereinrichtung kann wenigstens ein Parameter hinterlegt sein. Mithilfe der Steuereinrichtung kann wenigstens ein Parameter ermittelbar sein. Das wenigstens eine Ausgangssignal kann auf Basis des wenigstens einen Eingangssignals, wenigstens eines hinterlegten Parameters und/oder wenigstens eines ermittelten Parameters generierbar sein.

Die Kupplungseinrichtung kann in der vollständig geschlossenen Betätigungsstellung selbstregelnd sein. Ein Vorsteuermoment zum Schließen der Kupplungseinrichtung kann von der Brennkraftmaschine aufgebracht sein. Das Sonnenrad des Umlaufrädergetriebes kann mit einem von der Brennkraftmaschine erzeugten Moment beaufschlagt sein. Damit kann die Kupplungseinrichtung in Schließrichtung beaufschlagt sein. Damit ist eine Betätigung der Kupplungseinrichtung mithilfe des elektrischen Aktuators nicht erforderlich, um die geschlossenen Betätigungsstellung beizubehalten. Eine elektrische Energie ist nicht erforderlich.

Zusammenfassend und mit anderen Worten dargestellt ergibt sich somit durch die Erfindung unter anderem eine rotorintegrierte Kupplung mit elektrischer Betätigung. Die Kupplung kann in einem Rotor eines E-Motors eines Hybrides platziert sein. Die Kupplung kann ein Trennen bzw. Verbinden einer E-Maschine mit einem Verbrennungsmotor gewährleisten. Dabei können folgende Betriebszustände durch die Kupplung erreicht werden: Bei reinem elektrischen Fahren kann die Kupplung offen und der Verbrennungsmotor von einem Antriebsstrang abgekoppelt sein (Verbrennungsmotor aus). Wird mehr Leistung bzw. Moment benötigt, kann der Verbrennungsmotor durch teilweises Schließen der Kupplung über den E-Motor gestartet werden. Die Kupplung kann in Schubbetrieb gehen, um den Verbrennungsmotor zu starten. Das Moment, welches die Kupplung überträgt, kann in diesem Zustand exakt regelbar sein. Dies kann über einen elektrischen Aktuator mit variabel einstellbarem Moment geschehen. Das Moment kann mit einer Wirbelstrombremse realisierbar sein, welche ein gefordertes Vorsteuermoment verschleißfrei und somit über Lebensdauer immer das gleiche Moment aufbringt. Das Moment der Wirbelstrombremse kann über einen Planetensatz verstärkt sein. Bei laufendem Verbrennungsmotor kann sich die Kupplung über den Freilauf und den Planetensatz selbst schließen, um das Moment des Verbrennungsmotors in den Antriebsstrang zu übertragen. In diesem Zustand kann die Kupplung selbstregelnd sein und keine zusätzliche elektrische Energie benötigen. In diesem Zustand können Fahrzustände wie Boosten, Rekuperieren, Lastpunktverschiebung und reines Fahren mit dem Verbrennungsmotor realisierbar sein. Die Kupplung kann sich öffnen, sobald die Drehzahl des Rotors kleiner oder gleich der Drehzahl des Verbrennungsmotors wird.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen Antriebsstrang eines Kraftfahrzeugs mit einem parallelen Vollhybridantrieb und einer in dem Antriebsstrang angeordneten Kupplung und
- Fig. 2: eine in einen Rotor einer elektrischen Maschine integrierte Kupplung mit einer Betätigungseinrichtung für ein Kraftfahrzeug mit einem Hybridantrieb.

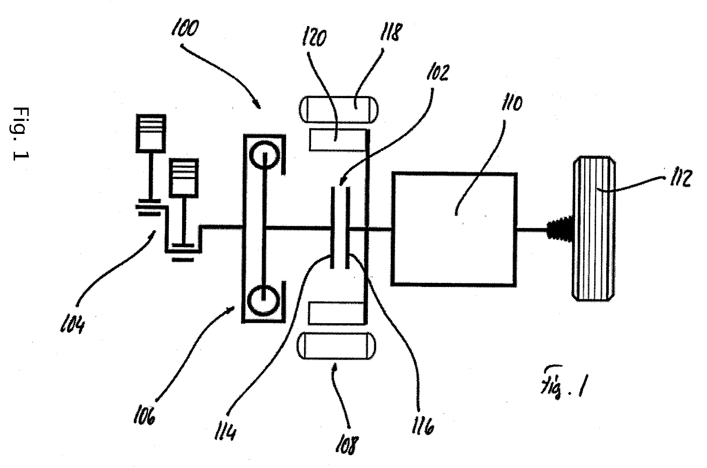

Fig. 1 zeigt einen Antriebsstrang 100 eines hier ansonsten nicht näher dargestellten Kraftfahrzeugs mit einem parallelen Vollhybridantrieb und einer in dem Antriebsstrang 100 angeordneten Kupplung 102. Der Antriebsstrang 100 weist eine Brennkraftmaschine 104, ein Zweimassenschwungrad 106, die Kupplung 102, eine elektrische Maschine 108, ein Getriebe 110 und wenigstens ein antreibbares Rad 112 auf. Die elektrische Maschine 108 ist als Motor betreibbar. Die Kupplung 102 ist in dem Antriebsstrang 100 zwischen dem Zweimassenschwungrad 106 und der elektrischen Maschine 108 angeordnet. Die Kupplung 102 ist in dem Antriebsstrang 100 zwischen dem Zweimassenschwungrad 106 und dem Getriebe 110 angeordnet.

Die Kupplung 102 weist ein Eingangsteil 114 und ein Ausgangsteil 116 auf. Das Eingangsteil 114 der Kupplung 102 ist mit dem Zweimassenschwungrad 106 verbunden. Das Ausgangsteil 116 der Kupplung 102 ist mit der elektrischen Maschine 108 verbunden. Die elektrische Maschine 108 weist einen Stator 118 und einen Rotor 120 auf. Das Ausgangsteil 116 der Kupplung 102 ist mit dem Rotor 120 der elektrischen Maschine 108 verbunden. Das Ausgangsteil 116 der Kupplung 102 ist mit dem Getriebe 110 verbunden. Die elektrische Maschine 108 ist mit dem Getriebe 110 verbunden. Der Rotor 120 der elektrischen Maschine 108 ist mit dem Getriebe 110 verbunden.

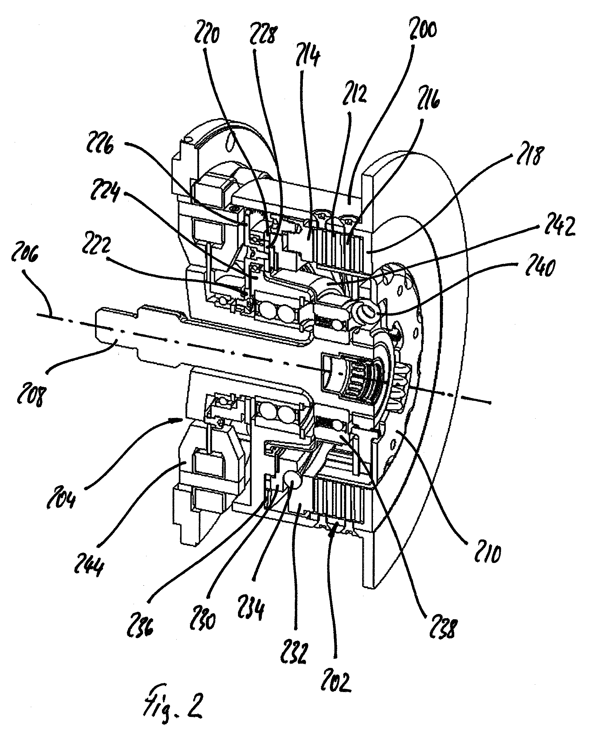

Fig. 2 zeigt eine in einen Rotor 200, wie Rotor 120 gemäß Fig. 1, einer hier ansonsten nicht näher dargestellten elektrischen Maschine, wie elektrische Maschine 108 gemäß Fig. 1, integrierte Kupplung 202, wie Kupplung 102 gemäß Fig. 1, mit einer Betätigungseinrichtung 204 für ein Kraftfahrzeug mit einem Hybridantrieb. Die Kupplung 202 ist in Erstreckungsrichtung der Drehachse 206 sowie in radialer Richtung innerhalb des Rotors 200 angeordnet. Die Betätigungseinrichtung 204 ist in Erstreckungsrichtung der Drehachse 206 sowie in radialer Richtung innerhalb des Rotors 200 angeordnet. Die Kupplung 202 und die Betätigungseinrichtung 204 sind ineinander geschachtelt angeordnet. Die Kupplung 202 ist brennkraftmaschinenseitig angeordnet. Die Betätigungseinrichtung 204 ist getriebeseitig angeordnet.

Die Kupplung 202 weist ein Eingangsteil und ein Ausgangsteil auf. Das Eingangsteil weist eine Welle 208, einen Momentfühler 210 und Kupplungsscheiben, wie 212, auf. Das Ausgangsteil der Kupplung 202 weist eine Anpressplatte 214, Zwischendruckplatten, wie 216, und eine Druckplatte 218 auf. Die Kupplungsscheiben 212 sind drehfest mit der Welle 208 verbunden. Die Anpressplatte 214, die Zwischendruckplatten 216 und die Druckplatte 218 sind drehfest mit dem Rotor 200 verbunden. Die Anpressplatte 214 ist in Erstreckungsrichtung der Drehachse 206 begrenzt axial verlagerbar.

Die Betätigungseinrichtung 204 weist ein Umlaufrädergetriebe mit einem Hohlrad 220, einem Sonnenrad 222, Umlaufrädern und einem Steg 224 auf. Das Hohlrad 220 weist eine Innenverzahnung auf. Das Sonnenrad 222 weist eine Außenverzahnung auf. Die Umlaufräder weisen jeweils eine Außenverzahnung auf. Das Umlaufrädergetriebe weist erste Umlaufräder, wie 226, auf, die mit dem Sonnenrad 222 eine erste Übersetzung bilden. Das Umlaufrädergetriebe weist zweite Umlaufräder, wie 228, auf, die mit dem Hohlrad 220 eine zweite Übersetzung bilden. Es sind jeweils ein erstes Umlaufrad 226 und ein zweites Umlaufrad 228 miteinander drehfest verbunden. Die ersten Umlaufräder 226 weisen jeweils einen größeren Durchmesser auf als die zweiten Umlaufräder 228. Die Umlaufräder 226, 228 sind im Steg 224 gelagert.

Die Betätigungseinrichtung 204 weist eine Rampeneinrichtung mit einem ersten Rampenring 230 und einem zweiten Rampenring 232 auf. Der erste Rampenring 230 weist erste Rampen auf. Der zweite Rampenring 232 weist zweite Rampen auf. Der erste Rampenring 230 und der zweite Rampenring 232 sind relativ zueinander verdrehbar. Zwischen dem ersten Rampenring 230 und dem zweiten Rampenring 232 sind Wälzkörper, wie 234, angeordnet. Eine Verdrehung der Rampenringe 230, 232 relativ zueinander bewirkt eine Abstandsänderung zwischen den Rampenringen 230, 232. Die Rampenringe 230, 232 sind über das Umlaufrädergetriebe miteinander verbunden. Der erste Rampenring 230 ist mit dem Hohlrad 220 fest verbunden. Der zweite Rampenring 232 ist mit dem Steg 224 drehfest und zu dem Steg 224 axial verlagerbar verbunden. Der zweite Rampenring 232 ist mit dem Steg 224 mithilfe ringförmiger Blattfedern, wie 236, verbunden. Die Blattfedern 236 wirken als Zugfedern zwischen dem Steg 224 und dem Rampenring 232. Der Steg 224 ist mit dem Rotor 200 fest verbunden.

Die Betätigungseinrichtung 204 weist den Momentfühler 210 und einen Freilauf 238 auf. Der Momentfühler 210 dient zum geregelten Verstellen der Rampeneinrichtung. Der Momentfühler 210 weist ein Eingangsteil und ein Ausgangsteil auf. Das Eingangsteil des Momentfühlers 210 ist mit der Welle 208 drehfest verbunden. Das Ausgangsteil des Momentfühlers 210 ist mit den Kupplungsscheiben 212 drehfest verbunden. Zwischen dem Eingangsteil und dem Ausgangsteil des Momentfühlers 210 sind Schraubendruckfedern, wie 240, wirksam. Der Freilauf 238 weist einen Innenring und einen Außenring auf. Der Freilauf 238 weist Klemmkörper auf. Der Innenring des Freilaufs 238 ist mit der Welle 208 drehfest verbunden. Der Außenring des Freilaufs 238 ist mit einem hülsenförmigen Bauteil 242 drehfest verbunden, das mit den zweiten Umlaufrädern 228 korrespondiert. Der Momentfühler 210 und der Freilauf 238 sind in Erstreckungsrichtung der Drehachse 206 nebeneinander angeordnet. Der Momentfühler 210 und der Freilauf 238 überdecken sich in radialer Richtung. Die Schraubendruckfedern 240 und der Freilauf 238 überdecken sich in radialer Richtung abschnittsweise. Das Eingangsteil des Momentfühlers 210 und der Innenring des Freilaufs 238 weisen zumindest annähernd gleiche Innendurchmesser auf. Der Momentfühler 210 und der Freilauf 238 sind in Erstreckungsrichtung der Drehachse 206 innerhalb der Kupplung 202 angeordnet. Der Momentfühler 210 und der Freilauf 238 sind radial innerhalb der Kupplung 202 angeordnet.

Die Betätigungseinrichtung 204 weist eine Wirbelstrombremse 244 auf. Die Wirbelstrombremse 244 weist einen Bremsenstator und einen Bremsenrotor auf. Der Bremsenstator und der Bremsenrotor sind in radialer Richtung übereinanderliegend angeordnet. Der Bremsenstator ist radial außenseitig des Bremsenrotors angeordnet. Der Bremsenstator weist mehrere Spulen und Anker auf. Die Anker weisen jeweils eine klammerartige Form mit einem Rückenabschnitt und zwei Fingerabschnitten auf. Die Spulen sind jeweils an dem Rückenabschnitt eines Ankers angeordnet. Die Spulen weisen jeweils eine Wicklungsachse auf, die zur Drehachse 206 parallel angeordnet ist. Die Rückenabschnitte der Anker verlaufen jeweils parallel zur Drehachse 206. Der Bremsenstator ist mit dem Rotor 200 fest verbunden. Der Bremsenrotor weist eine scheibenartige Form auf. Der Bremsenrotor weist eine scheibenartige Metallplatte auf. Der Bremsenrotor ist drehfest mit dem Sonnenrad 222 verbunden. Die Anker des Bremsenstators umgreifen den Bremsenrotor jeweils klammerartig. Die Anker des Bremsenstators umgreifen den Bremsenrotor jeweils mit den Fingerabschnitten. Damit kann über das Sonnenrad 222 ein Vorsteuermoment zur Betätigung der Kupplung 202 eingeleitet werden. Das Umlaufrädergetriebe ist so angeordnet, dass das Vorsteuermoment verstärkt wird.

Bei rein elektrischem Fahren ist die Kupplung 202 geöffnet. Hohlrad 220, Steg 224, Umlaufräder 226, 228 und Sonnenrad 222 laufen mit gleicher Drehzahl (E-Motor Drehzahl), das Umlaufrädergetriebe ist sozusagen "verblockt". Dadurch wird ein Verdrehen der Rampenringe 230, 232 und die Betätigung der Kupplung 202 unterbunden. Zusätzlich ist ein Einfluss von Rotationsbeschleunigungen nahezu eliminiert, indem die mit dem Hohlrad 220 rotierenden Bauteile einerseits und die mit dem Sonnenrad 222 rotierenden Bauteile andererseits jeweils in etwa das gleiche Trägheitsmoment aufweisen.

Soll der Verbrennungsmotor nun gestartet werden, wird durch die Wirbelstrombremse 244 auf das Sonnerad 222 ein Vorsteuermoment für die Kupplung 202 erzeugt. Dieses Moment ist ein Bremsmoment und wirkt der ursprünglichen Drehbewegung entgegen. Das Sonnenrad 222 wird relativ zum bisher stehenden Umlaufrädergetriebe verdreht. Über die Funktion des Umlaufrädergetriebes wird das Hohlrad 220 und damit auch der Rampenring 230 relativ zum Steg 224 verdreht, was zugleich einem Verdrehen der Rampeneinrichtung und dem Schließen der Kupplung 202 entspricht.

Das Vorsteuermoment der Wirbelstrombremse 244 wird durch die Übersetzung am Umlaufrädergetriebe und an den Rampenringen 230, 232 so übersetzt, dass die Brennkraftmaschine mit dem geforderten Moment gestartet werden kann. Das Vorsteuermoment kann über die Stromzufuhr an der Wirbelstrombremse 244 exakt gesteuert und in kürzester Zeit aufgebaut werden. Die Startzeit der Brennkraftmaschine beträgt wenige Millisekunden. Durch die hohe Übersetzung des Moments und die kurze Betätigungszeit ergibt sich für das Starten der Brennkraftmaschine eine geringe Betätigungsenergie. Des Weiteren ist die Wirbelstrombremse 244 verschleißfrei und kann über das Magnetfeld des E-Magneten beliebige Zwischenstufen des geforderten Moments, ohne Momentschwankungen und Reibwertabhängigkeiten, realisieren.

Bei laufender Brennkraftmaschine wird das Vorsteuermoment über die Brennkraftmaschine selbst und den Freilauf 238 generiert. Die Welle 208 dient zum Anschluss der Brennkraftmaschine. In diesem Betriebszustand überträgt die Kupplung 202 ein Moment in Zugrichtung. Ein bestimmter Teil dieses Zugmoments wird über den Freilauf 238 als Vorsteuermoment für das Bauteil 242 benutzt. Damit wird die Kupplung 202 durch ein Teil des Moments der Brennkraftmaschine auf die Rampenringe 230, 232 über das Umlaufrädergetriebe betätigt. Die Kupplungsscheiben 212 und werden zwischen der Anpressplatte 214, den Zwischendruckplatten 216 und der Druckplatte 218 eingeklemmt und übertragen das geforderte Moment. Der Verdrehwinkel der Rampenringe 230, 232 wird über den Momentfühler 210 geregelt. Dieser ermöglicht es ebenfalls, dass sich die Kupplung 202 wieder öffnet, sobald kein Moment mehr übertragen wird. Durch diese Anordnung der Bauteile ist die Kupplung 202 in diesem Zustand selbstregelnd und benötigt keine weitere externe Energie zur Betätigung. In diesem Zustand sind Betriebszustände wie Lastverschiebung, Boosten und Fahren mit dem Verbrennungsmotor möglich. Ein Schubbetrieb der Brennkraftmaschine ist dem System ebenfalls möglich. Dabei wird die Wirbelstrombremse 244 im Dauerbetrieb betrieben.

### Bezugszeichenliste

- 100: Antriebsstrang
- 102: Kupplung
- 104: Brennkraftmaschine
- 106: Zweimassenschwungrad
- 108: elektrische Maschine
- 110: Getriebe
- 112: Rad
- 114: Eingangsteil
- 116: Ausgangsteil
- 118: Stator
- 120: Rotor

- 200: Rotor
- 202: Kupplung
- 204: Betätigungseinrichtung
- 206: Drehachse
- 208: Welle
- 210: Momentfühler
- 212: Kupplungsscheibe
- 214: Anpressplatte
- 216: Zwischendruckplatte
- 218: Druckplatte
- 220: Hohlrad
- 222: Sonnenrad
- 224: Steg
- 226: erstes Umlaufrad
- 228: zweites Umlaufrad
- 230: erster Rampenring
- 232: zweiter Rampenring
- 234: Wälzkörper
- 236: Blattfeder
- 238: Freilauf
- 240: Schraubendruckfeder
- 242: Bauteil
- 244: Wirbelstrombremse

## Patentansprüche

1. Kupplungseinrichtung (102, 202) mit einer Betätigungseinrichtung (204), insbesondere für einen Antriebsstrang (100) eines Kraftfahrzeugs aufweisend eine Brennkraftmaschine (104), eine elektrische Maschine (108) mit einem Stator (118) und einem Rotor (120, 200) und eine Getriebeeinrichtung (110), wobei die Kupplungseinrichtung (102, 202) in dem Antriebsstrang (100) zwischen der Brennkraftmaschine (104) einerseits und der elektrischen Maschine (108) sowie der Getriebeeinrichtung (110) andererseits anordenbar ist, die Kupplungseinrichtung (102, 202) und die Betätigungseinrichtung (204) in den Rotor (120, 200) der elektrischen Maschine (108) integriert sind und die Betätigungseinrichtung (204) eine verstellbare Rampeneinrichtung mit ersten Rampen (230) und zweiten Rampen (232) sowie ein Umlaufrädergetriebe mit einem Hohlrad (220), einem Sonnenrad (222), Umlaufrädern (226, 228) und einem Steg (224) aufweist, wobei die ersten Rampen (230) dem Hohlrad (220) und die zweiten Rampen (232) dem Steg (224) zugeordnet sind, wobei die Betätigungseinrichtung (204) einen Momentfühler (210) zum geregelten Verstellen der Rampeneinrichtung und eine Freilaufeinrichtung (238) aufweist und der Momentfühler (210) und die Freilaufeinrichtung (238) in radialer Richtung zumindest abschnittsweise überlappend angeordnet sind, **dadurch gekennzeichnet, dass** der Momentfühler (210) wenigstens eine Momentfeder (240) aufweist und die Momentfeder (240) und die Freilaufeinrichtung (238) in radialer Richtung zumindest abschnittsweise überlappend angeordnet sind.

2. Kupplungseinrichtung (102, 202) nach Anspruch 1, **dadurch gekennzeichnet, dass** die ersten Rampen (230) mit dem Hohlrad (220) fest verbunden sind, die zweiten Rampen (232) mithilfe von Blattfedern (236) mit dem Steg (224) drehfest und axial vorgespannt verbunden sind und der Steg (224) mit dem Rotor (120, 200) fest verbunden ist.

3. Kupplungseinrichtung (102, 202) nach wenigstens einem der vorhergehenden Ansprüche, **dadurch gekennzeichnet, dass** das Umlaufrädergetriebe Umlaufradpaare mit ersten Umlaufrädern (226) zur Bildung einer ersten Übersetzung mit dem Sonnenrad (222) und zweiten Umlaufrädern (228) zur Bildung einer zweiten Übersetzung mit dem Hohlrad (220) aufweist.

4. Kupplungseinrichtung (102, 202) nach Anspruch 3, **dadurch gekennzeichnet, dass** die ersten Umlaufräder (226) einen größeren Durchmesser als die zweiten Umlaufräder (228) aufweisen.

5. Kupplungseinrichtung (102, 202) nach wenigstens einem der vorhergehenden Ansprüche, **dadurch gekennzeichnet, dass** die hohlradseitigen Bauteile und die sonnenradseitigen Bauteile ein zumindest annähernd gleiches Trägheitsmoment aufweisen.

6. Kupplungseinrichtung (102, 202) nach wenigstens einem der vorhergehenden Ansprüche, **dadurch gekennzeichnet, dass** die Kupplungseinrichtung (102, 202) eine Anpressplatte (214) aufweist und der Steg (224) der Anpressplatte (224) zugeordnet ist.

7. Kupplungseinrichtung (102, 202) nach wenigstens einem der vorhergehenden Ansprüche, **dadurch gekennzeichnet, dass** die Momentfeder (240)als schraubenförmige Druckfeder ausgebildet ist.

8. Kupplungseinrichtung (102, 202) nach wenigstens einem der vorhergehenden Ansprüche, **dadurch gekennzeichnet, dass** die Betätigungseinrichtung (204) zum Schließen der Kupplungseinrichtung (102, 202) eine Wirbelstrombremse (244) aufweist.

9. Kupplungseinrichtung (102, 202) nach Anspruch 8, **dadurch gekennzeichnet, dass** mithilfe der Wirbelstrombremse (244) das Sonnenrad (222) mit einem einer Drehung des Umlaufrädergetriebes entgegen wirkenden Moment derart beaufschlagbar ist, dass sich das Hohlrad (220) mit den ersten Rampen (230) und der Steg (224) mit den zweiten Rampen (232) relativ zueinander verdrehen.

## Claims

1. Clutch device (102, 202) having an actuating device (204), in particular for a drive train (100) of a motor vehicle having an internal combustion engine (104), an electric machine (108) with a stator (118) and a rotor (120, 200), and a transmission device (110), wherein the clutch device (102, 202) being arrangeable in the drive train (100) between the internal combustion engine (104) on one side and the electric machine (108) and the transmission device (110) on the other side, the clutch device (102, 202) and the actuating device (204) being integrated into the rotor (120, 200) of the electric machine (108), and the actuating device (204) having an adjustable ramp device with first ramps (230) and second ramps (232) and a planetary gear wheel mechanism with an internal gear (220), a sun gear (222), planetary gears (226, 228) and a spider (224), the first ramps (230) being assigned to the internal gear (220), and the second ramps (232) being assigned to the spider (224), the actuating device (204) having a moment sensor (210) for the regulated adjustment of the ramp device and a freewheel device (238), and the moment sensor (210) and the freewheel device (238) being arranged so as to overlap in the radial direction at least in sections, **characterized in that** the moment sensor (210) has at least one moment spring (240), and the moment spring (240) and the freewheel device (238) are arranged so as to overlap in the radial direction at least in sections.

2. Clutch device (102, 202) according to Claim 1, **characterized in that** the first ramps (230) are connected fixedly to the internal gear (220), the second ramps (232) are connected fixedly to the spider (224) so as to rotate with it and in an axially prestressed manner byleaf springs (236), and the spider (224) is connected fixedly to the rotor (120, 200).

3. Clutch device (102, 202) according to at least one of the preceding claims, **characterized in that** the planetary gear wheel mechanism has planetary gear pairs with first planetary gears (226) for forming a first transmission ratio with the sun gear (222) and second planetary gears (228) for forming a second transmission ratio with the internal gear (220).

4. Clutch device (102, 202) according to Claim 3, **characterized in that** the first planetary gears (226) have a greater diameter than the second planetary gears (228).

5. Clutch device (102, 202) according to at least one of the preceding claims, **characterized in that** the components on the internal gear side and the components on the sun gear side have an at least approximately equal moment of inertia.

6. Clutch device (102, 202) according to at least one of the preceding claims, **characterized in that** the clutch device (102, 202) has a pressure plate (214), and the spider (224) is assigned to the pressure plate (224).

7. Clutch device (102, 202) according to at least one of the preceding claims, **characterized in that** the moment spring (240) is configured as a helical compression spring.

8. Clutch device (102, 202) according to at least one of the preceding claims, **characterized in that** the actuating device (204) has an eddy current brake (244) for closing the clutch device (102, 202).

9. Clutch device (102, 202) according to Claim 8, **characterized in that**, by the eddy current brake (244), the sun gear (222) can be loaded with a moment which counteracts a rotation of the planetary gear wheel mechanism in such a way that the internal gear (220) with the first ramps (230) and the spider (224) with the second ramps (232) rotate relative to one another.

## Revendications

1. Dispositif d'embrayage (102, 202) comprenant un dispositif d'actionnement (204), en particulier pour une chaîne cinématique (100) d'un véhicule automobile présentant un moteur à combustion interne (104), une machine électrique (108) avec un stator (118) et un rotor (120, 200) et un dispositif de transmission (110), le dispositif d'embrayage (102, 202) pouvant être disposé dans la chaîne cinématique (100) entre le moteur à combustion interne (104) d'une part et la machine électrique (108) ainsi que le dispositif de transmission (110) d'autre part, le dispositif d'embrayage (102, 102) et le dispositif d'actionnement (204) étant intégrés dans le rotor (120, 200) de la machine électrique (108) et le dispositif d'actionnement (204) présentant un dispositif de rampes réglable avec des premières rampes (230) et des deuxièmes rampes (232) ainsi qu'une transmission planétaire avec une couronne dentée (220), une roue solaire (222), des satellites (226, 228) et un porte-satellites (224), les premières rampes (230) étant associées à la couronne dentée (220) et les deuxièmes rampes (232) étant associées au porte-satellites (224), le dispositif d'actionnement (204) présentant un capteur de couple (210) pour le réglage régulé du dispositif de rampe et un dispositif à roue libre (238) et le capteur de couple (210) et le dispositif à roue libre (238) étant disposés de manière à se chevaucher au moins en partie dans la direction radiale, **caractérisé en ce que** le capteur de couple (210) présente au moins un ressort de couple (240) et le ressort de couple (240) et le dispositif à roue libre (238) étant disposés de manière à se chevaucher au moins en partie dans la direction radiale.

2. Dispositif d'embrayage (100, 202) selon la revendication 1, **caractérisé en ce que** les premières rampes (230) sont connectées fixement à la couronne dentée (220), les deuxièmes rampes (232) sont connectées à l'aide de ressorts à lame (236) au porte-satellites (224) de manière solidaire en rotation et de manière précontrainte axialement et le porte-satellites (224) est connecté fixement au rotor (120, 200).

3. Dispositif d'embrayage (102, 202) selon au moins l'une quelconque des revendications précédentes, **caractérisé en ce que** la transmission planétaire présente des paires de satellites avec des premiers satellites (226) pour former un premier rapport de démultiplication avec la roue solaire (222) et des deuxièmes satellites (228) pour former un deuxième rapport de démultiplication avec la couronne dentée (220).

4. Dispositif d'embrayage (102, 202) selon la revendication 3, **caractérisé en ce que** les premiers satellites (226) présentent un plus grand diamètre que les deuxièmes satellites (228).

5. Dispositif d'embrayage (102, 202) selon au moins l'une quelconque des revendications précédentes, **caractérisé en ce que** les composants du côté de la couronne dentée et les composants du côté de la roue solaire présentent un couple d'inertie au moins approximativement égal.

6. Dispositif d'embrayage (102, 202) selon au moins l'une quelconque des revendications précédentes, **caractérisé en ce que** le dispositif d'embrayage (102, 202) présente une plaque de pressage (214) et le porte-satellites (224) est associé à la plaque de pressage (224).

7. Dispositif d'embrayage (102, 202) selon au moins l'une quelconque des revendications précédentes, **caractérisé en ce que** le ressort de couple (240) est réalisé sous forme de ressort de compression hélicoïdal.

8. Dispositif d'embrayage (102, 202) selon au moins l'une quelconque des revendications précédentes, **caractérisé en ce que** le dispositif d'actionnement (204) présente, pour fermer le dispositif d'embrayage (102, 202), un frein à courants de Foucault (244).

9. Dispositif d'embrayage (102, 202) selon la revendication 8, **caractérisé en ce qu'**à l'aide du frein à courants de Foucault (244), la roue solaire (222) peut être sollicitée avec un couple agissant à l'encontre d'une rotation de la transmission planétaire de telle sorte que la couronne dentée (220) avec les premières rampes (230) et le porte-satellites (224) avec les deuxièmes rampes (232) tournent relativement l'un par rapport à l'autre.
